# EUROPEAN PATENT APPLICATION

(11) **EP 4 047 528 A1**
(43) Date of publication of application: **24.08.2022**
(21) Application number: 21208183.0
(22) Date of filing: 15.11.2021
(51) Int. Cl.: G06N 3/08, G06N 3/04

(54) **DETERMINATION PROCESSING PROGRAM, DETERMINATION PROCESSING METHOD, AND INFORMATION PROCESSING APPARATUS**

(30) Priority: 17.02.2021 JP 2021023333
(71) Applicant: Fujitsu Limited, Kawasaki-shi, Kanagawa 211-8588 (JP)
(72) Inventor: Katoh, Takashi, Kawasaki-shi, Kanagawa 211-8588 (JP); Uemura, Kento, Kawasaki-shi, Kanagawa 211-8588 (JP); Yasutomi, Suguru, Kawasaki-shi, Kanagawa 211-8588 (JP); Hayase, Tomohiro, Kawasaki-shi, Kanagawa 211-8588 (JP)
(74) Representative: Hoffmann Eitle

(57) **Abstract**

A computer-implemented method of a determination processing, the method including: calculating, in response that deterioration of a classification model has occurred, a similarity between a first determination result and each of a plurality of second determination results, the first determination result being a determination result output from the classification model by inputting first input data after the deterioration has occurred to the classification model, and the plurality of second determination results being determination results output from the classification model by inputting, to the classification model, a plurality of pieces of post-conversion data converted by inputting second input data before the deterioration occurs to a plurality of data converters; selecting a data converter from the plurality of data converters on the basis of the similarity; and preprocessing in data input of the classification model by using the selected data converter.

## Description

### FIELD

The embodiments discussed herein are related to a determination processing program, and the like.

### BACKGROUND

By executing machine learning using a data set with a label as input, a machine learning model is generated, and data is applied to the machine learning model that has been trained to classify the data into a plurality of classes.

Here, with passage of time, or the like, the distribution of the applied data may gradually change from the distribution of the data at the time of performing the machine learning. Such change in the distribution of data will be described as a domain shift. For example, in related art, the accuracy of the machine learning model deteriorates due to the domain shift, and thus, when deterioration of the machine learning model is detected, it is coped with by executing re-learning with respect to the machine learning model.

Examples of the related art include as follows: Ming-Yu Liu, Thomas Breuel, Jan Kautz " Unsupervised Image-to-Image Translation Networks" nVIDIA, NIPS 2017.

### SUMMARY

### TECHNICAL PROBLEM

However, the related art described above has a problem that re-learning for coping with the domain shift is costly.

In one aspect, it is an object of the embodiments to provide a determination processing program, a determination processing method, and an information processing apparatus, which enable reduction of cost required for re-learning (may be referred to as "re-training") to cope with the domain shift.

### SOLUTION TO PROBLEM

According to an aspect of the embodiments, there is provided a computer-implemented method of a determination processing, the method including: calculating, in response that deterioration of a classification model has occurred, a similarity between a first determination result and each of a plurality of second determination results, the first determination result being a determination result output from the classification model by inputting first input data after the deterioration has occurred to the classification model, and the plurality of second determination results being determination results output from the classification model by inputting, to the classification model, a plurality of pieces of post-conversion data converted by inputting second input data before the deterioration occurs to a plurality of data converters; selecting a data converter from the plurality of data converters on the basis of the similarity; and preprocessing in data input of the classification model by using the selected data converter.

### ADVANTAGEOUS EFFECTS OF INVENTION

It is possible to reduce cost required for re-learning to cope with a domain shift.

### BRIEF DESCRIPTION OF DRAWINGS

FIG. 1 is a diagram for describing a reference technique;
FIG. 2 is a diagram for describing point 1 of processing of an information processing apparatus according to the present embodiment;
FIG. 3 is a diagram for describing point 2 of the information processing apparatus according to the present embodiment;
FIG. 4 is a diagram (1) for describing point 3 of the information processing apparatus according to the present embodiment;
FIG. 5 is a diagram (2) for describing point 3 of the information processing apparatus according to the present embodiment;
FIG. 6 is a diagram (1) for describing the processing of the information processing apparatus according to the present embodiment;
FIG. 7 is a diagram (2) for describing the processing of the information processing apparatus according to the present embodiment;
FIG. 8 is a diagram (3) for describing the processing of the information processing apparatus according to the present embodiment;
FIG. 9 is a diagram (4) for describing the processing of the information processing apparatus according to the present embodiment;
FIG. 10 is a diagram (5) for describing the processing of the information processing apparatus according to the present embodiment;
FIG. 11 is a diagram (6) for describing the processing of the information processing apparatus according to the present embodiment;
FIG. 12 is a diagram (7) for describing the processing of the information processing apparatus according to the present embodiment;
FIG. 13 is a diagram (8) for describing the processing of the information processing apparatus according to the present embodiment;
FIG. 14 is a diagram (9) for describing the processing of the information processing apparatus according to the present embodiment;
FIG. 15 is a diagram (10) for describing the processing of the information processing apparatus according to the present embodiment;
FIG. 16 is a diagram (11) for describing the processing of the information processing apparatus according to the present embodiment;
FIG. 17 is a diagram (12) for describing the processing of the information processing apparatus according to the present embodiment;
FIG. 18 is a diagram for describing effects of the information processing apparatus according to the present embodiment;
FIG. 19 is a functional block diagram illustrating a configuration of the information processing apparatus according to the present embodiment;
FIG. 20 is a diagram illustrating one example of a data structure of a learning data set;
FIG. 21 is a diagram illustrating one example of a data structure of a data set table;
FIG. 22 is a diagram illustrating one example of a data structure of a style conversion table;
FIG. 23 is a diagram illustrating one example of a data structure of a learning data set table;
FIG. 24 is a flowchart illustrating a processing procedure of the information processing apparatus according to the present embodiment;
FIG. 25 is a diagram for describing another processing of a selection unit; and
FIG. 26 is a diagram illustrating one example of a hardware configuration of a computer that implements functions similar to those of a learning device according to the present embodiment.

### DESCRIPTION OF EMBODIMENTS

Hereinafter, embodiments of a determination processing program, a determination processing method, and an information processing apparatus disclosed in the present application will be described in detail on the basis of the drawings. Note that the embodiments are not limited to the present disclosure.

### [Embodiments]

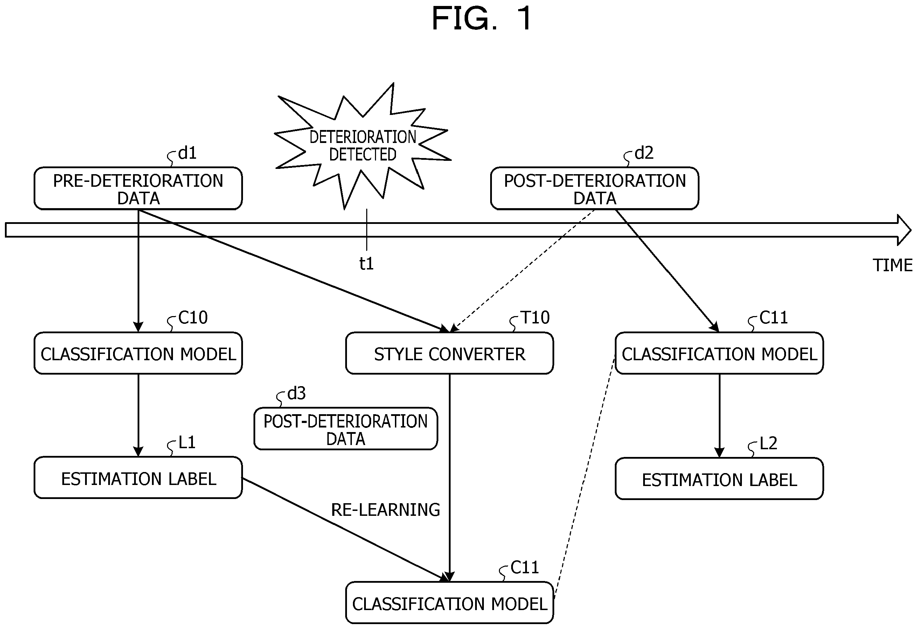

Prior to describing the present embodiment, a reference technique will be described. FIG. 1 is a diagram for describing a reference technique. An apparatus that executes the reference technique will be described as a "reference apparatus". It is assumed that the reference apparatus has trained a classification model C10 by using a data set with a label. The classification model C10 is a model that classifies the input data into one of the classification classes, and is achieved by a machine learning model such as NN (Neural Network). In this description, training a model by machine learning may be referred to as "learning a model".

When the reference apparatus detects deterioration of the classification model C10 by a domain shift, the reference apparatus performs a model repair process as illustrated in the following steps S1 to S5. For example, at a time t1, a deterioration (domain shift) is detected, and data before the time t1 is assumed as pre-deterioration data (data set) d1. Data after the time t1 is assumed as post-deterioration data (data set) d2.

Step S1 will be described. The reference apparatus learns (i.e., trains) a style converter T10 on the basis of the pre-deterioration data d1 and the post-deterioration data d2. The style converter T10 is a model that style-converts the pre-deterioration data d1 into the post-deterioration data d2. The style converter T10 is implemented by a machine learning model such as NN.

Step S2 will be described. The reference apparatus specifies a classification class of the pre-deterioration data d1 by inputting the pre-deterioration data d1 to the classification model C10. The classification class of the pre-deterioration data d1 is assumed as an estimated label L1. The reference apparatus repeatedly executes step S2 for a plurality of pieces of the pre-deterioration data d1.

Step S3 will be described. The reference apparatus style-converts the pre-deterioration data d1 into post-deterioration data d3 by inputting the pre-deterioration data d1 to the style converter T10. The reference apparatus repeatedly executes step S3 for the plurality of pieces of the pre-deterioration data d1.

Step S4 will be described. The reference apparatus re-learns (i.e., re-trains) the classification model C10 by using data (data set) in which the estimated label specified in step S2 is assumed as a "correct label" and the post-deterioration data d3 style-converted in step S3 is assumed as "input data". The re-learned classification model C10 (i.e., the re-trained classification model) is assumed as a classification model C11.

Step S5 will be described. The reference apparatus specifies an estimated label L2 of the post-deterioration data d2 by using the classification model C11.

Here, in the reference technique described in FIG. 1, every time the deterioration of the classification model C10 (C11) is detected, the machine learning of the style converter T10 and the machine learning of the classification model C10 are executed again, and thus it takes time until the classification system is restarted.

Next, points 1 to 3 of processing of the information processing apparatus according to the present embodiment will be described. First, "point 1" will be described. Upon detecting deterioration of a classification model due to the domain shift, the information processing apparatus according to the present embodiment learns (i.e., trains) and stores a style converter that converts data from before deterioration to after deterioration. If there is a style converter that performs a conversion similar to the current domain shift among a plurality of stored style converters, the information processing apparatus uses such a style converter to execute machine learning of the classification model. The style converter is one example of a "data converter".

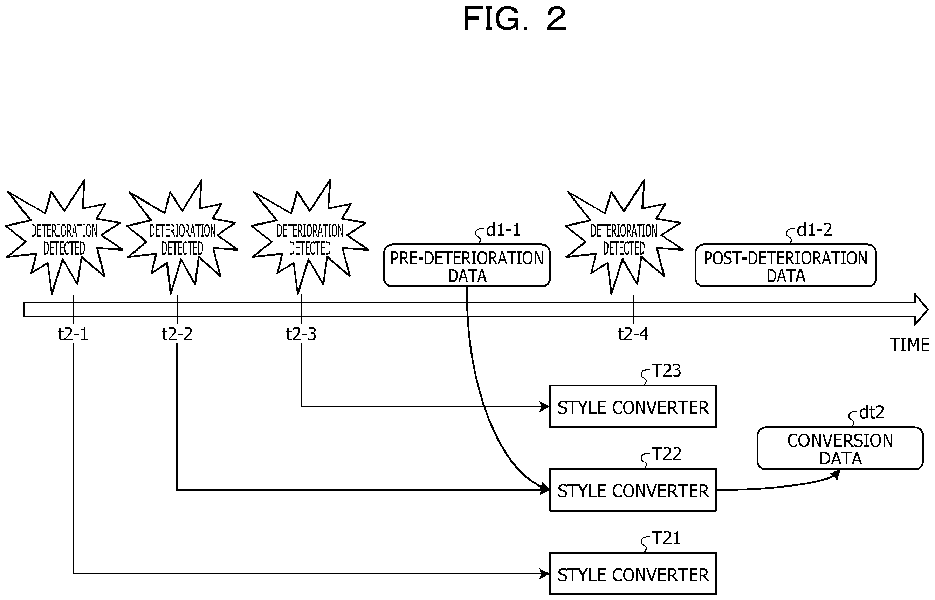

FIG. 2 is a diagram for describing point 1 of the processing of the information processing apparatus according to the present embodiment. For example, it is assumed that the deterioration of the classification model is detected at times t2-1, t2-2, and t2-3. The information processing apparatus machine-learns a style converter T21 on the basis of data before deterioration and data after deterioration with reference to the time t2-1. The information processing apparatus machine-learns a style converter T22 on the basis of data before deterioration and data after deterioration with reference to the time t2-2. The information processing apparatus machine-learns a style converter T23 on the basis of data before deterioration and data after deterioration with reference to the time t2-3.

Upon detecting deterioration of the classification model at a time t2-4, the information processing apparatus performs the following processing. Data before the time t2-4 is assumed as pre-deterioration data d1-1. Data after the time t2-4 is assumed as post-deterioration data d1-2. The information processing apparatus style-converts the pre-deterioration data d1-1 into conversion data dt2 by inputting the pre-deterioration data d1-1 to the style converter T22. Here, when the conversion data dt2 and the post-deterioration data d1-2 are similar, the information processing apparatus specifies that there exists a style converter that executes a style conversion similar to the domain shift from the pre-deterioration data d1-1 to the post-deterioration data d1-2. The post-deterioration data is one example of "first input data". The pre-deterioration data is one example of "second input data".

When there exists a style converter that performs a style conversion similar to the domain shift from the pre-deterioration data d1-1 to the post-deterioration data d1-2, the information processing apparatus uses the style converter T22 again and skips the processing of generating a new style converter. Thus, cost for generating a new style converter may be reduced.

Next, "point 2" will be described. The information processing apparatus uses, as a similarity of the domain shift, a difference between an output result when the post-deterioration data is input to the classification model and an output result when the pre-deterioration data is input to the style converter. The information processing apparatus specifies a style converter having a small difference of an output result as a style converter to be used again.

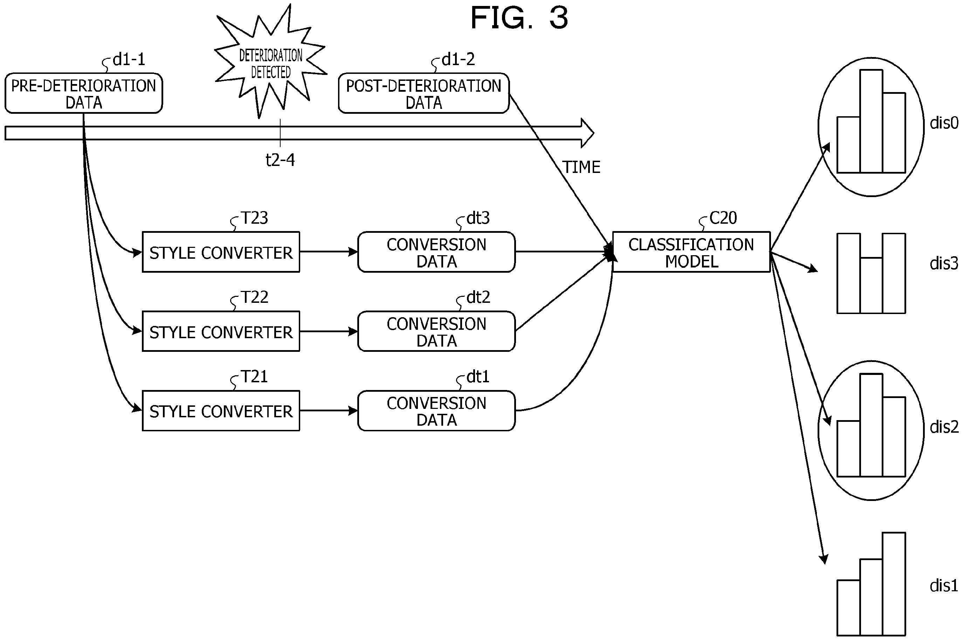

FIG. 3 is a diagram for describing point 2 of the information processing apparatus according to the present embodiment. In FIG. 3, deterioration of the classification model C20 is detected at the time t2-4, and the data before the time t2-4 is assumed as the pre-deterioration data d1-1. The data after the time t2-4 is assumed as the post-deterioration data d1-2. Description for the style converters T21 to T23 is similar to the description for the style converters T21 to T23 illustrated in FIG. 2.

The information processing apparatus style-converts the pre-deterioration data d1-1 into conversion data dt1 by inputting the pre-deterioration data d1-1 to the style converter T21. The information processing apparatus style-converts the pre-deterioration data d1-1 into the conversion data dt2 by inputting the pre-deterioration data d1-1 to the style converter T22. The information processing apparatus style-converts the pre-deterioration data d1-1 into conversion data dt3 by inputting the pre-deterioration data d1-1 to the style converter T23.

The information processing apparatus specifies a distribution dis0 of an output label by inputting the post-deterioration data d1-2 to the classification model C20. The information processing apparatus specifies a distribution dis1 of the output label by inputting the conversion data dt1 to the classification model C20. The information processing apparatus specifies a distribution dis2 of the output label by inputting the conversion data dt2 to the classification model C20. The information processing apparatus specifies a distribution dis3 of the output label by inputting the conversion data dt3 to the classification model C20.

When the information processing apparatus calculates each of a difference between the distribution dis0 and the distribution dis1, a difference between the distribution dis0 and the distribution dis2, and a difference between the distribution dis0 and the distribution dis3, the difference between the distribution dis0 and the distribution dis2 is the smallest. The conversion data corresponding to the distribution dis2 is the conversion data dt2, and the style converter that has style-converted the pre-deterioration data d1-1 into the conversion data dt2 is the style converter T22. Thus, the information processing apparatus specifies the style converter T22 as the style converter to be used again.

The style converter T22 is a style converter capable of executing a style conversion similar to the domain shift from the pre-deterioration data d1-1 to the post-deterioration data d1-2.

Next, "point 3" will be described. When there exists a style converter that has been used as a similar domain shift multiple times in a most recent fixed period, the information processing apparatus performs re-learning (may be referred to as "re-training") of the classification model by using the style converter specified in the process described in point 2 and the style converter that has been used multiple times.

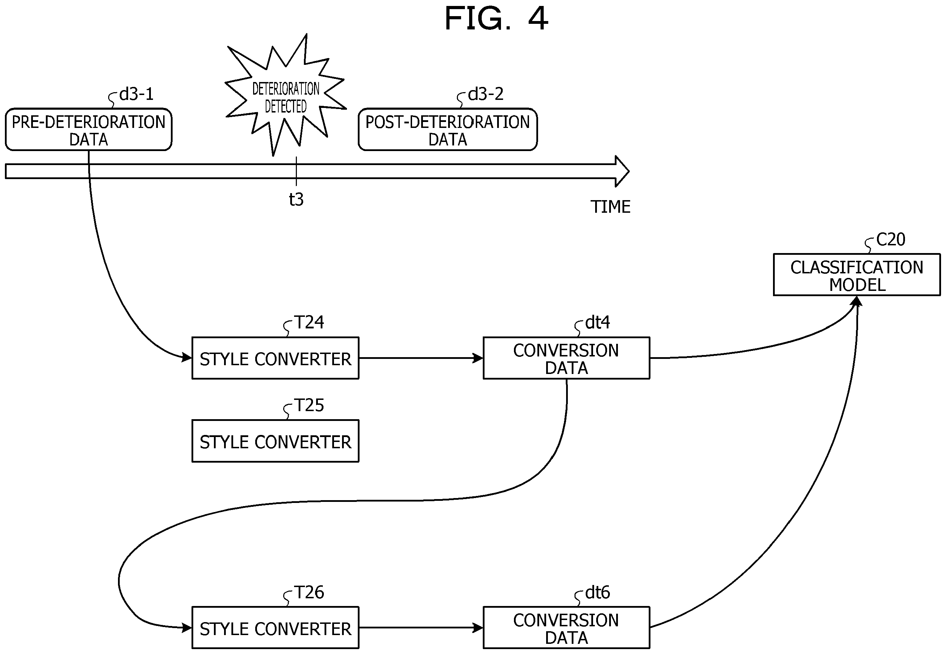

FIG. 4 is a diagram (1) for describing point 3 of the information processing apparatus according to the present embodiment. In FIG. 4, deterioration of the classification model C20 is detected at a time t3, and data before the time t3 is assumed as pre-deterioration data d3-1. The data after the time t3 is assumed as post-deterioration data d3-2. Style converters T24 to T26 are assumed as style converters learned every time deterioration of the classification model C20 is detected.

The style converter specified by the information processing apparatus by executing the processing described in point 2 is assumed as the style converter T24. Furthermore, the style converter that has been used as a similar domain shift multiple times in the most recent fixed period is assumed as the style converter T26.

The information processing apparatus style-converts the pre-deterioration data d3-1 into conversion data dt4 by inputting the pre-deterioration data d3-1 to the style converter T24. The information processing apparatus style-converts the conversion data dt4 into conversion data dt6 by inputting the conversion data dt4 to the style converter T26.

The information processing apparatus executes re-learning of the classification model C20 by using the conversion data dt4 and dt6. For example, the correct label corresponding to the conversion data dt4 and dt6 is assumed as the estimated label when the pre-deterioration data d3-1 is input to the classification model C20.

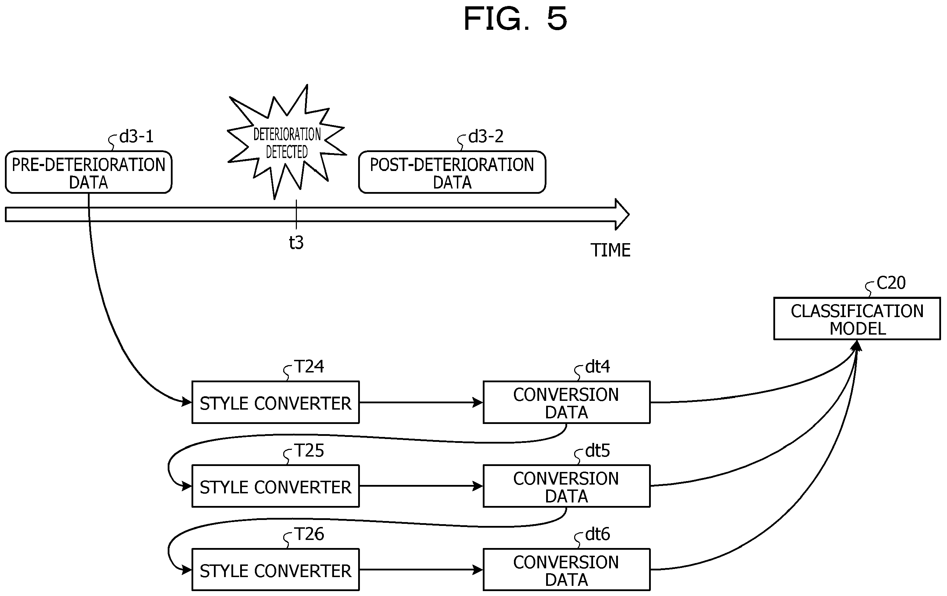

FIG. 5 is a diagram (2) for describing point 3 of the information processing apparatus according to the present embodiment. In FIG. 5, deterioration of the classification model C20 is detected at the time t3, and the data before the time t3 is assumed as the pre-deterioration data d3-1. The data after the time t3 is assumed as the post-deterioration data d3-2. The style converters T24 to T26 are assumed as style converters learned every time deterioration of the classification model C20 is detected.

The style converter specified by the information processing apparatus by executing the processing described in point 2 is assumed as the style converter T24. Furthermore, the style converter that has been used as a similar domain shift multiple times (predetermined number of times or more) in the most recent fixed period is assumed as the style converters T25 and T26.

The information processing apparatus style-converts the pre-deterioration data d3-1 into the conversion data dt4 by inputting the pre-deterioration data d3-1 to the style converter T24. The information processing apparatus style-converts the conversion data dt4 into conversion data dt5 by inputting the conversion data dt4 to the style converter T25. The information processing apparatus style-converts the conversion data dt5 into conversion data dt6 by inputting the conversion data dt5 to the style converter T26.

The information processing apparatus executes re-learning of the classification model C20 by using the conversion data dt4 to dt6. For example, the correct label corresponding to the conversion data dt4 to dt6 is the estimated label when the pre-deterioration data d3-1 is input to the classification model C20.

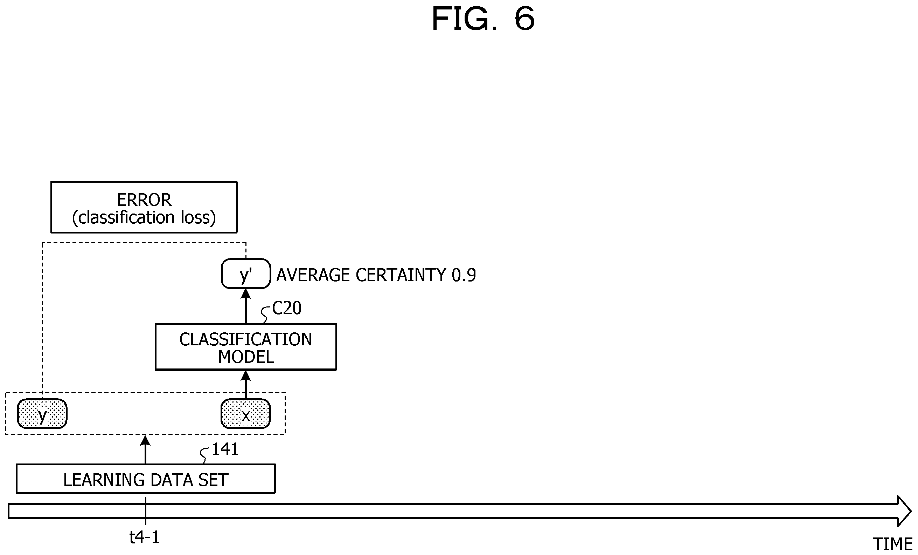

The information processing apparatus according to the present embodiment executes reuse of the style converter T10 and re-learning of the classification model C10, on the basis of points 1 to 3. Hereinafter, one example of processing by the information processing apparatus will be described. FIGs. 6 to 17 are diagrams for describing the processing of the information processing apparatus according to the present embodiment.

FIG. 6 will be described. The information processing apparatus executes machine learning of the classification model C20 at a time t4-1 by using a learning data set 141 (may be referred to as "a training data set") with the correct label. The learning data set 141 includes a plurality of sets of input data x and a correct label y.

The information processing apparatus learns (i.e., trains) parameters of the classification model C20 so that the error (classification loss) between an output result y' output from the classification model C20 and the correct label y becomes small by inputting the input data x to the classification model C20. For example, the information processing apparatus uses an error backpropagation method to learn the parameters of the classification model C20 so that the error becomes small.

The information processing apparatus calculates average certainty of the output result y' when the input data x is input to the classification model C20, and detects deterioration of the classification model C20 by using the average certainty. The information processing apparatus detects deterioration of the classification model C20 when the average certainty is equal to or less than a threshold. For example, the threshold value is assumed as "0.6". In the example illustrated in FIG. 6, if the average certainty when the input data x of the learning data set 141 is input to the classification model C20 is "0.9", the average certainty is larger than the threshold, and thus the information processing apparatus determines that no deterioration has occurred in the classification model C20.

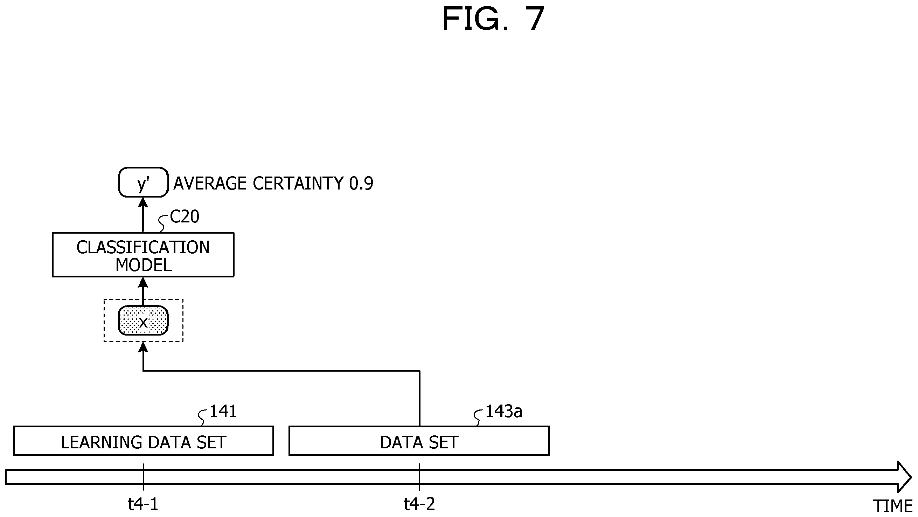

The description proceeds to FIG. 7. At a time t4-2, the information processing apparatus repeats the processing of acquiring the output result y' (classification result) by inputting the input data x included in a data set 143a to the classification model C20, thereby classifying the data set 143a. In the example illustrated in FIG. 7, if the average certainty when the input data x of the data set 143a is input to the classification model C20 is "0.9", the average certainty is larger than the threshold, and thus the information processing apparatus determines that no deterioration has occurred in the classification model C20.

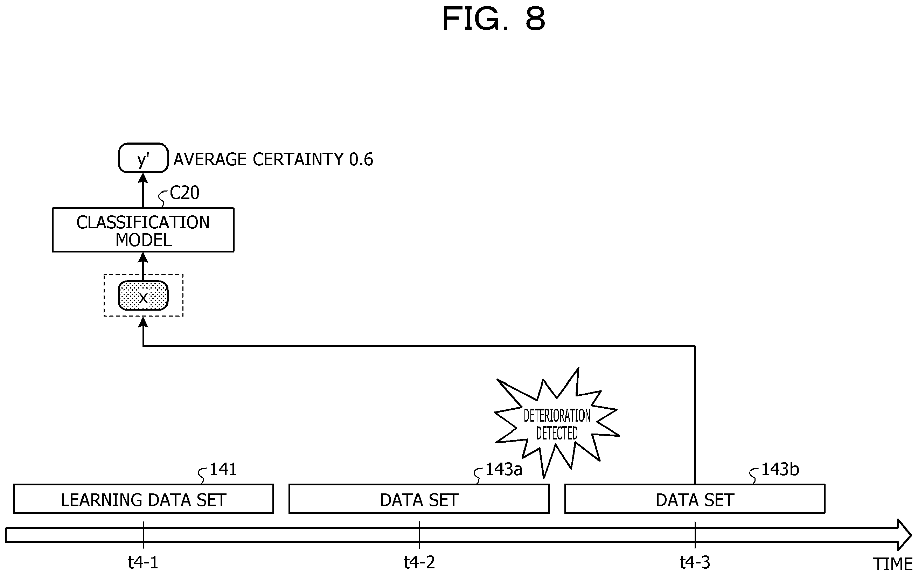

The description proceeds to FIG. 8. At a time t4-3, the information processing apparatus repeats the processing of acquiring the output result y' (classification result) by inputting the input data x included in a data set 143b to the classification model C20, thereby classifying the data set 143b. In the example illustrated in FIG. 8, if the average certainty when the input data x of the data set 143b is input to the classification model C20 is "0.6", the average certainty is equal to or less than the threshold, and thus the information processing apparatus determines that deterioration has occurred in the classification model C20.

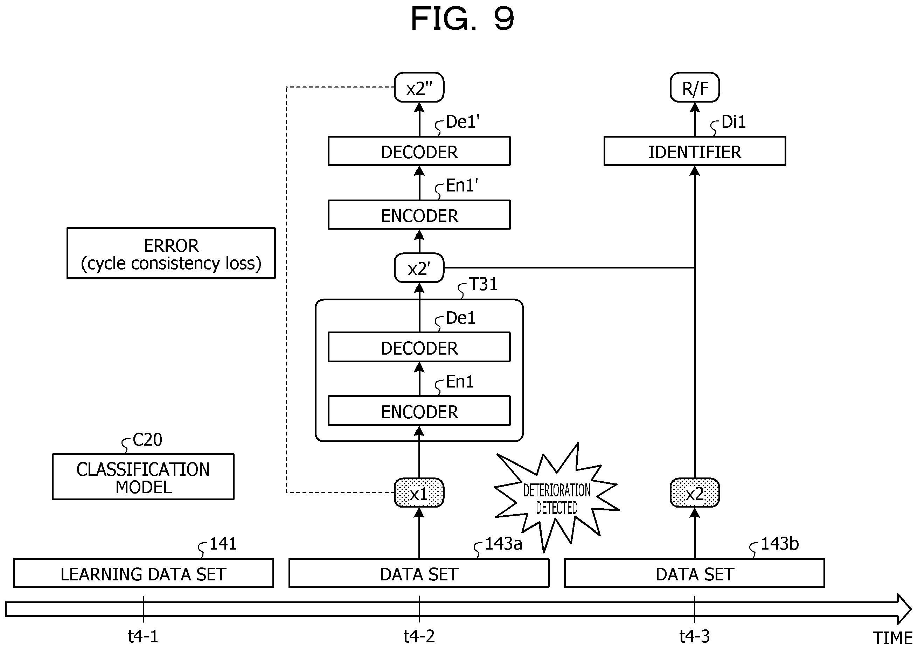

The description proceeds to FIG. 9. The information processing apparatus machine-learns a style converter T31 that style-converts input data x1 of the data set 143a into input data x2 of the data set 143b by performing the processing described in FIG. 9. The style converter T31 has an encoder En1 and a decoder De1. The information processing apparatus sets an encoder En1', a decoder De1', and an identifier Di1 in addition to the style converter T31.

The encoders En1 and En1' are machine learning models that convert input data into feature amounts in a feature amount space. The decoders De1 and De1' are machine learning models that convert feature amounts in the feature amount space into input data. The identifier Di1 is a machine learning model that identifies whether the input data is Real or Fake. For example, the identifier Di1 outputs "Real" when it is determined that the input data is the input data of the data set 143b, and outputs "Fake" when it is determined that the input data is the input data other than the data set 143b. The encoders En1, En1', the decoders De1, De1', and the identifier Di1 are machine learning models such as NN.

To the style converter T31, the input data x1 of the data set 143a is input, and the style converter T31 outputs x2'. The x2' is input to the encoder En1', converted into a feature amount, and then converted into x2" by the decoder De1'.

Upon receiving an input of the x2' output from the style converter T31 or an input of the input data x2 of the data set 143b, the identifier Di1 outputs Real or Fake depending on whether or not the input data is the input data of the data set 143b.

When an error between the input data "x1" in FIG. 9 and the output data "x2"" becomes small and the output data x2' is input to the identifier Di1, the information processing apparatus machine-learns parameters of the encoders En1 and En1', the decoders De1 and De1', and the identifier Di1 so that the identifier Di1 outputs "Real". By the information processing apparatus executing such machine learning, the style converter T31 that style-converts the input data x1 of the data set 143a into the input data x2 of the data set 143b is machine-learned. For example, the information processing apparatus uses the error backpropagation method to machine-learn each parameter so that the error becomes small.

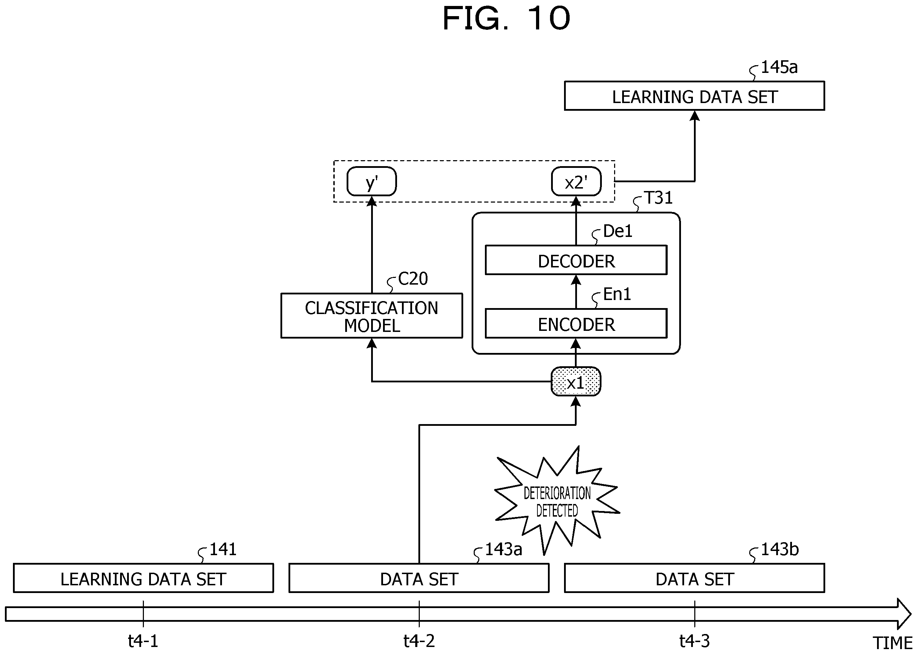

The description proceeds to FIG. 10. The information processing apparatus generates a learning data set 145a by performing the processing described in FIG. 10. The information processing apparatus style-converts the input data x1 into the input data x2' by inputting the input data x1 of the data set 143a to the style converter T31. The information processing apparatus specifies an estimated label (correct label) y' on the basis of a classification result when the input data x1 is input to the classification model C20.

The information processing apparatus registers a set of the input data x2' and the correct label y' in the learning data set 145a. The information processing apparatus generates the learning data set 145a by repeatedly executing the processing described above for each piece of the input data x included in the data set 143a.

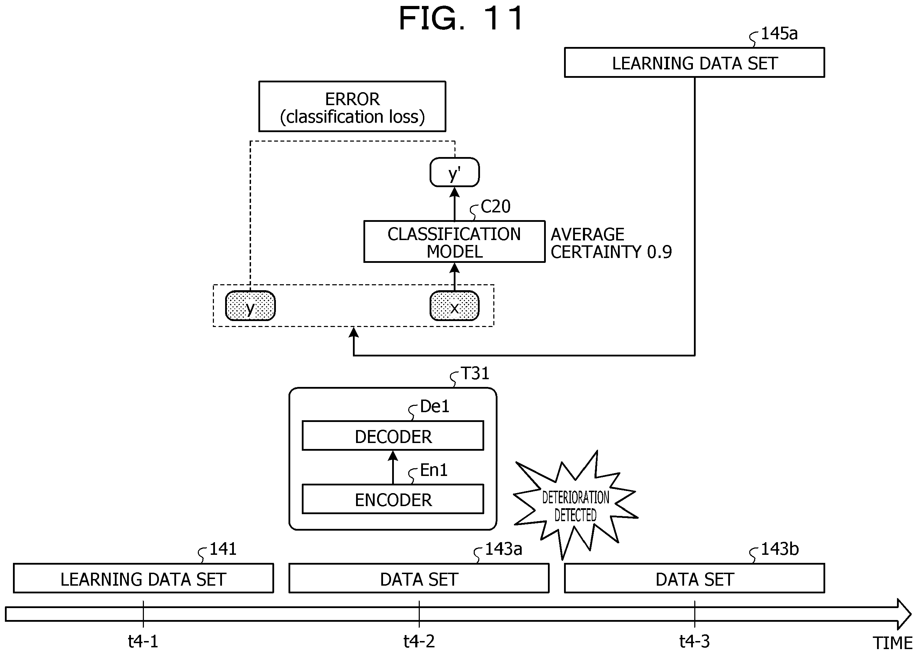

The description proceeds to FIG. 11. The information processing apparatus re-learns the classification model C20 by performing the processing described in FIG. 11. The information processing apparatus executes machine learning of the classification model C20 again by using the learning data set 145a with the correct label. The learning data set 145a includes a plurality of sets of the input data x and the correct label y.

The information processing apparatus re-learns the parameters of the classification model C20 so that the error (classification loss) between the output result y' output from the classification model C209 and the correct label y becomes small, by inputting the input data x to the classification model C20. For example, the information processing apparatus uses the error backpropagation method to learn the parameters of the classification model C20 so that the error becomes small.

The information processing apparatus calculates average certainty of the output result y' when the input data x is input to the classification model C20, and detects deterioration of the classification model C20 by using the average certainty. The information processing apparatus detects deterioration of the classification model C20 when the average certainty is equal to or less than the threshold. In the example illustrated in FIG. 11, if the average certainty when the input data x of the learning data set 145a is input to the classification model C20 is "0.9", the average certainty is larger than the threshold, and thus the information processing apparatus determines that no deterioration has occurred in the classification model C20.

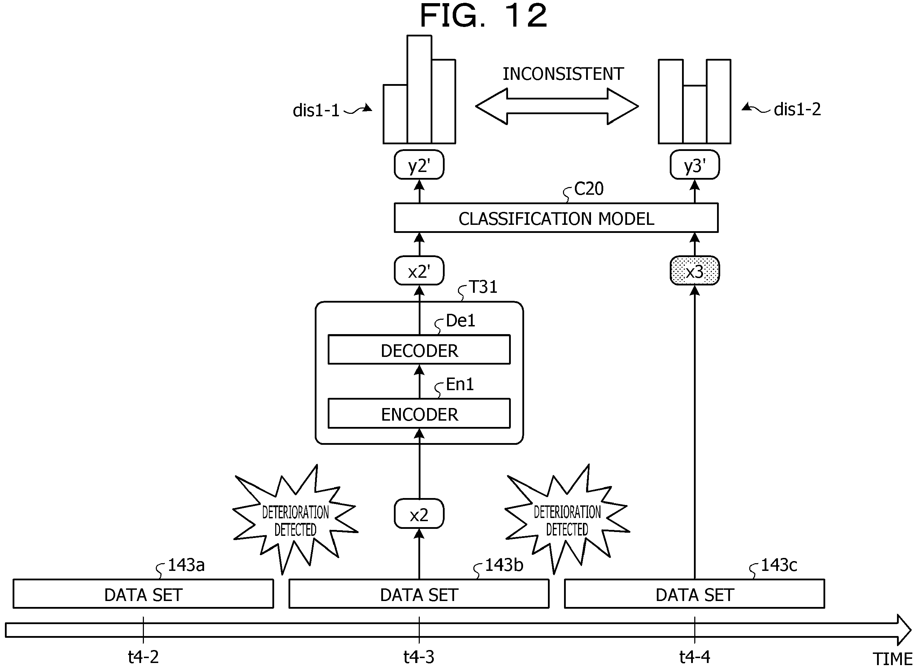

The description proceeds to FIG. 12. At a time t4-4, the information processing apparatus repeats the processing of acquiring the output result (classification result) by inputting input data x3 included in a data set 143c to the classification model C20, thereby classifying the data set 143c. For example, if the average certainty when the input data x3 of the data set 143c is input to the classification model C20 is "0.6", the average certainty is equal to or less than the threshold, and thus the information processing apparatus determines that deterioration has occurred in the classification model C20.

If deterioration of the classification model C20 is detected again with the data set 143c, the information processing apparatus determines, by the following processing, whether or not the change from the data set 143b to the data set 143c is a change similar to a style change by the style converter T31. The information processing apparatus style-converts the input data x2 of the data set 143b into the conversion data x2' by inputting the input data x2 to the style converter T31.

In the information processing apparatus, an output label y2' is output by inputting the conversion data x2' to the classification model C20. A distribution of the output label y2' is assumed as a distribution dis1-1. In the information processing apparatus, an output label y3' is output by inputting the input data x3 of the data set 143c to the classification model C20. A distribution of the output label y3' is assumed as a distribution dis1-2.

The information processing apparatus determines that a difference between the distribution dis1-1 and the distribution dis1-2 is equal to or larger than the threshold and the distributions are inconsistent. For example, the information processing apparatus determines that the change from the data set 143b to the data set 143c is not a change similar to the style change by the style converter T31.

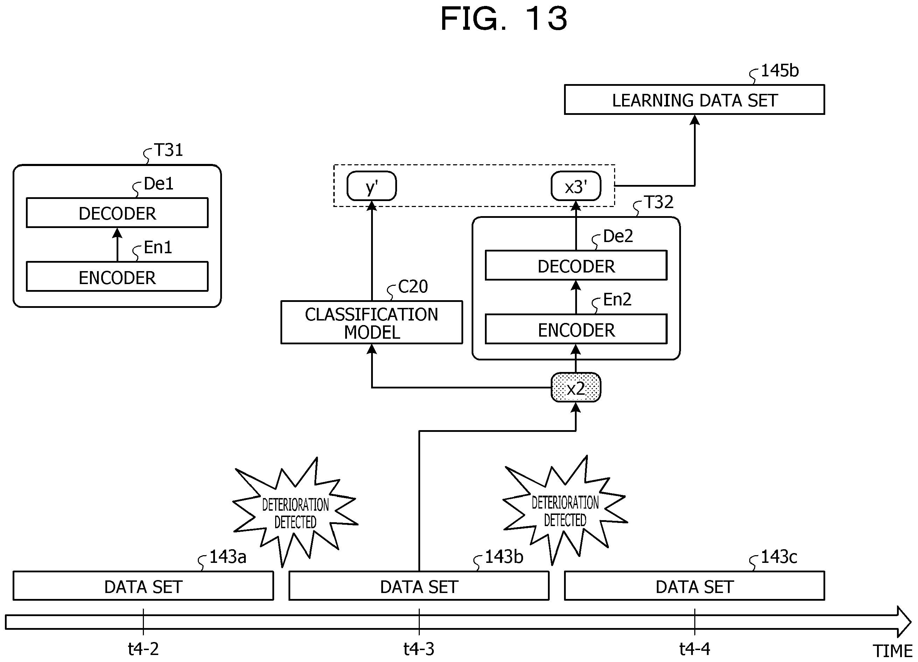

The description proceeds to FIG. 13. The information processing apparatus machine-learns a style converter T32 that style-converts the input data of the data set 143b into the input data of the data set 143c. Processing of machine learning the style converter T32 is similar to the processing of machine learning the style learning T31 described in FIG. 9. The style converter T32 has an encoder En2 and a decoder De2.

The information processing apparatus generates a learning data set 145b by executing the following processing. The information processing apparatus style-converts the input data x2 into input data x3' by inputting the input data x2 of the data set 143b to the style converter T32. The information processing apparatus specifies the estimated label (correct label) y' on the basis of a classification result when the input data x2 is input to the classification model C20.

The information processing apparatus registers a set of the input data x3' and the correct label y' in the learning data set 145b. The information processing apparatus generates the learning data set 145b by repeatedly executing the processing described above for each piece of the input data x included in the data set 143b.

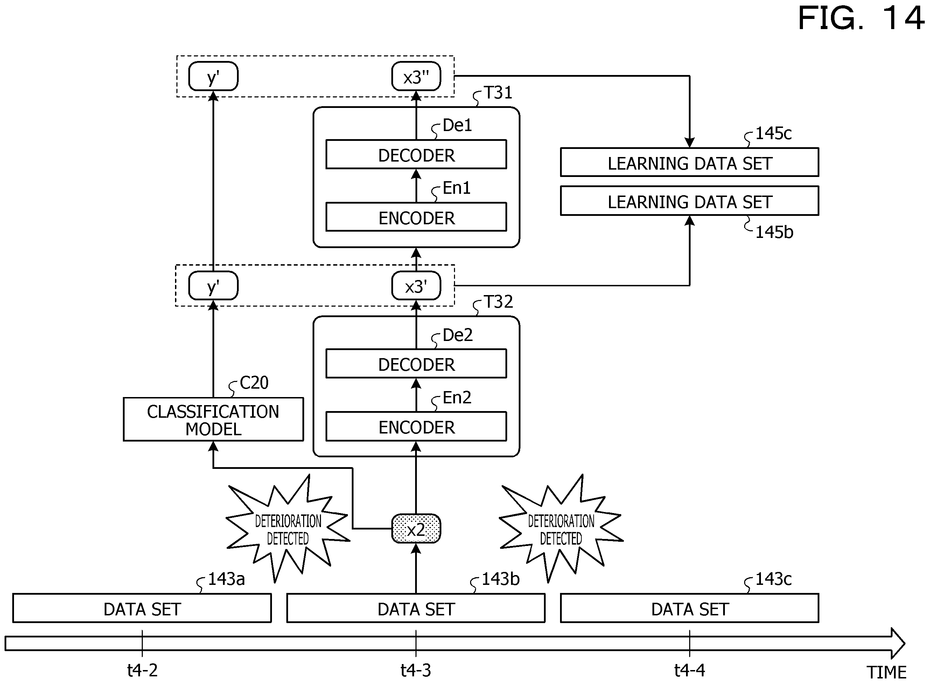

The description proceeds to FIG. 14. The information processing apparatus generates a learning data set 145c by executing processing illustrated in FIG. 14. The information processing apparatus obtains output data x3" by inputting the data x3' output from the style converter T32 as input data to the style converter T31. The data x3' is data calculated by inputting the input data x2 of the data set 143b to the style converter T32.

The information processing apparatus specifies the estimated label (correct label) y' on the basis of the classification result when the input data x2 is input to the classification model C20.

The information processing apparatus registers a set of the input data x3" and the correct label y' in the learning data set 145c. The information processing apparatus generates the learning data set 145c by repeatedly executing the processing described above for each piece of the input data x included in the data set 143b. Note that the processing of generating the learning data set 145b has been described in FIG. 13.

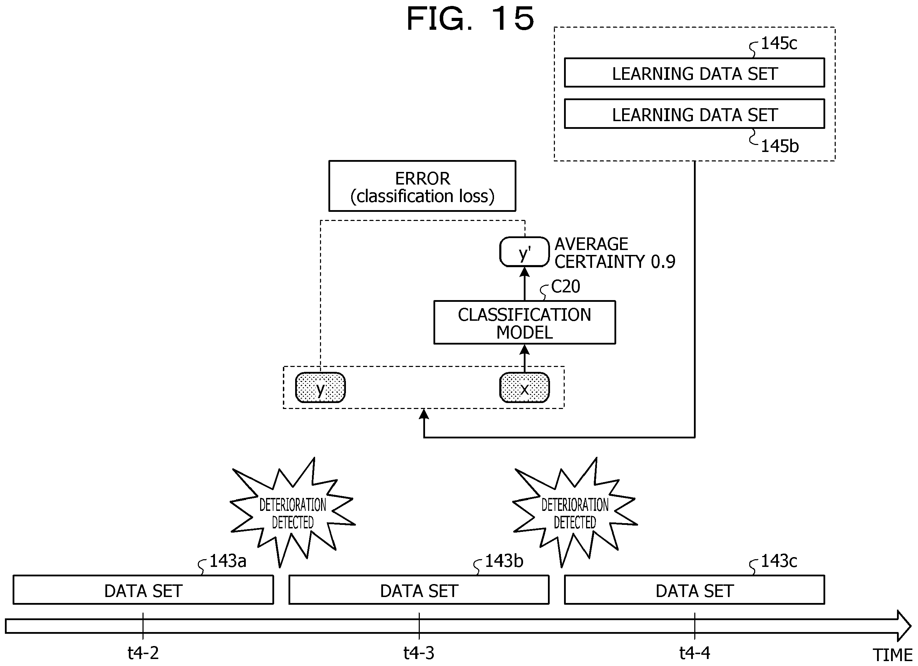

The description proceeds to FIG. 15. The information processing apparatus re-learns the classification model C20 by performing the processing described in FIG. 15. The information processing apparatus executes machine learning of the classification model C20 again by using the learning data sets 145b and 145c with the correct labels. The learning data sets 145b and 145c include a plurality of sets of the input data x and the correct label y.

The information processing apparatus re-learns the parameters of the classification model C20 so that the error (classification loss) between the output result y' output from the classification model C209 and the correct label y becomes small, by inputting the input data x to the classification model C20. For example, the information processing apparatus uses the error backpropagation method to learn the parameters of the classification model C20 so that the error becomes small.

The information processing apparatus calculates average certainty of the output result y' when the input data x is input to the classification model C20, and detects deterioration of the classification model C20 by using the average certainty. The information processing apparatus detects deterioration of the classification model C20 when the average certainty is equal to or less than the threshold. In the example illustrated in FIG. 15, if the average certainty when the input data x of the learning data sets 145b and 145c is input to the classification model C20 is "0.9", the average certainty is larger than the threshold, and thus the information processing apparatus determines that no deterioration has occurred in the classification model C20.

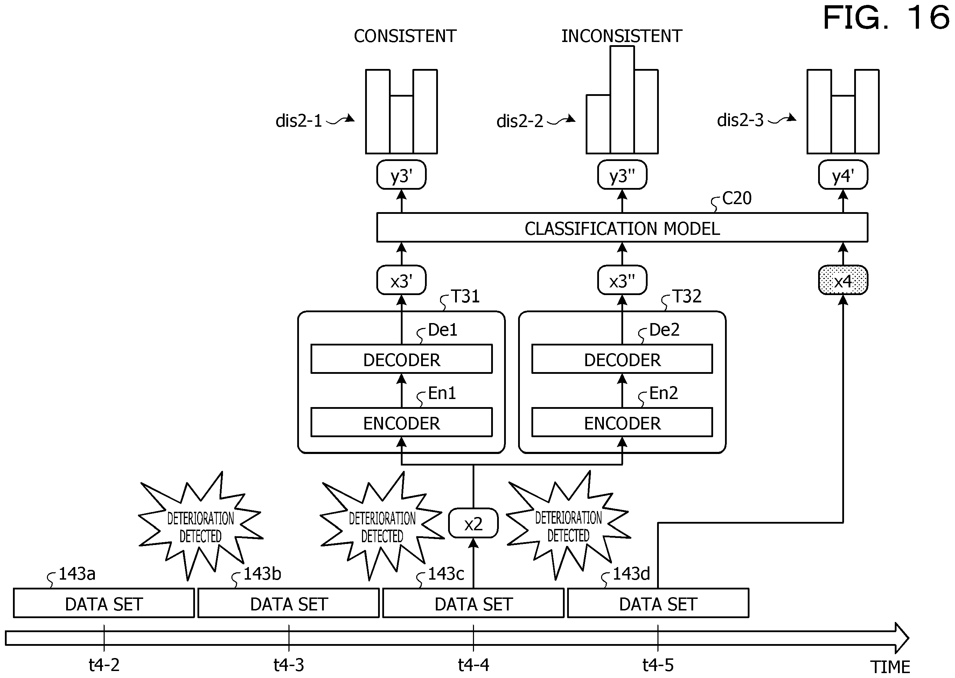

The description proceeds to FIG. 16. At a time t4-5, the information processing apparatus repeats the processing of acquiring the output result (classification result) by inputting input data x4 included in a data set 143d to the classification model C20, thereby classifying the data set 143d. For example, if the average certainty when the input data x4 of the data set 143d is input to the classification model C20 is "0.6", the average certainty is equal to or less than the threshold, and thus the information processing apparatus determines that deterioration has occurred in the classification model C20.

If deterioration of the classification model C20 is detected again with the data set 143d, the information processing apparatus determines, by the following processing, whether or not the change from the data set 143c to the data set 143d is a change similar to the style change by the style converter T31 or style converter T32. The information processing apparatus style-converts the input data x2 into conversion data x3' and x3" by inputting the input data x2 of the data set 143c to the style converters T31 and T32.

In the information processing apparatus, the output label y3' is output by inputting the conversion data x3' to the classification model C20. The distribution of the output label y3' is assumed as a distribution dis2-1. In the information processing apparatus, an output label y3" is output by inputting the conversion data x3" to the classification model C20. A distribution of the output label y3" is assumed as a distribution dis2-2. In the information processing apparatus, an output label y4' is output by inputting the input data x4 of the data set 143d to the classification model C20. The distribution of the output label y4' is assumed as a distribution dis2-3.

The information processing apparatus determines that a difference between the distribution dis2-3 and the distribution dis2-2 is equal to or larger than the threshold and the distributions are inconsistent. For example, the information processing apparatus determines that the change from the data set 143c to the data set 143d is not a change similar to the style change by the style converter T32.

On the other hand, the information processing apparatus determines that the difference between the distribution dis2-3 and the distribution dis2-1 is equal to or greater than the threshold and the distributions are consistent. For example, the information processing apparatus determines that the change from the data set 143c to the data set 143d is a change similar to the style change by the style converter T31. In this case, the information processing apparatus uses the style converter T31 again without generating a new style converter.

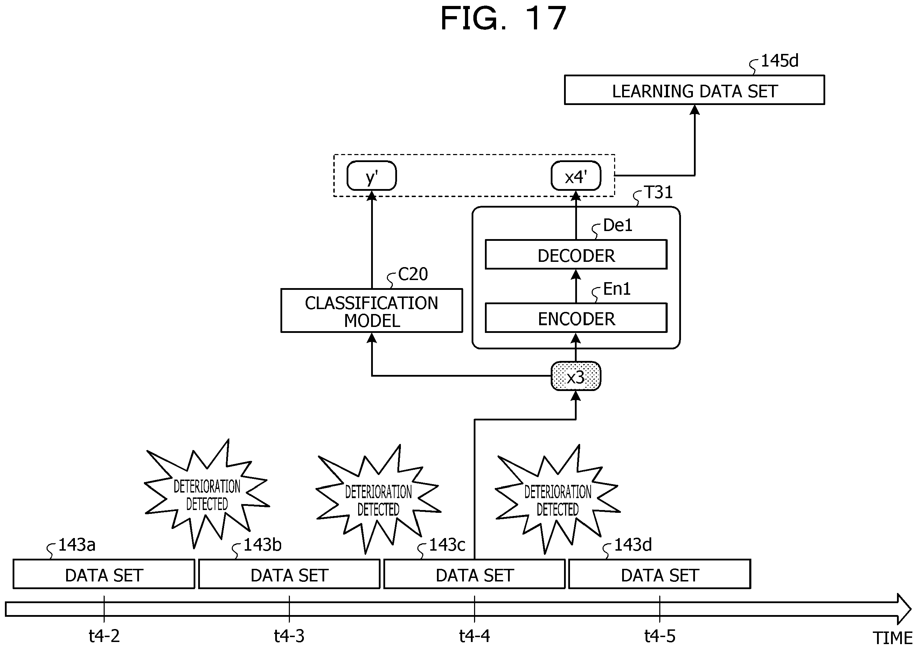

The description proceeds to FIG. 17. As described in FIG. 16, the information processing apparatus reuses the style converter T31 as a style converter that style-converts the input data of the data set 143c into the input data of the data set 143d.

The information processing apparatus generates a learning data set 145d by executing the following processing. The information processing apparatus style-converts the input data x3 into the input data x4' by inputting the input data x3 of the data set 143c to the style converter T31. The information processing apparatus specifies the estimated label (correct label) y' on the basis of a classification result when the input data x3 is input to the classification model C20.

The information processing apparatus registers a set of the input data x4' and the correct label y' in the learning data set 145d. The information processing apparatus generates the learning data set 145d by repeatedly executing the processing described above for each piece of the input data x included in the data set 143c. Although not illustrated, the information processing apparatus re-learns the classification model C20 by using the learning data set 145d.

As described above, upon detecting the deterioration of the classification model, the information processing apparatus according to the present embodiment determines whether or not there is a style converter capable of style-converting from data before deterioration detection to data after deterioration detection among the style converters that have already been trained. When there is a style converter capable of style-converting from the data before deterioration detection to the data after deterioration detection, the information processing apparatus reuses such a style converter to generate the learning data set and execute re-learning of the classification model. Thus, the processing of learning the style converter may be suppressed every time the deterioration of the classification model is detected, so that the cost required for re-learning to cope with the domain shift may be reduced.

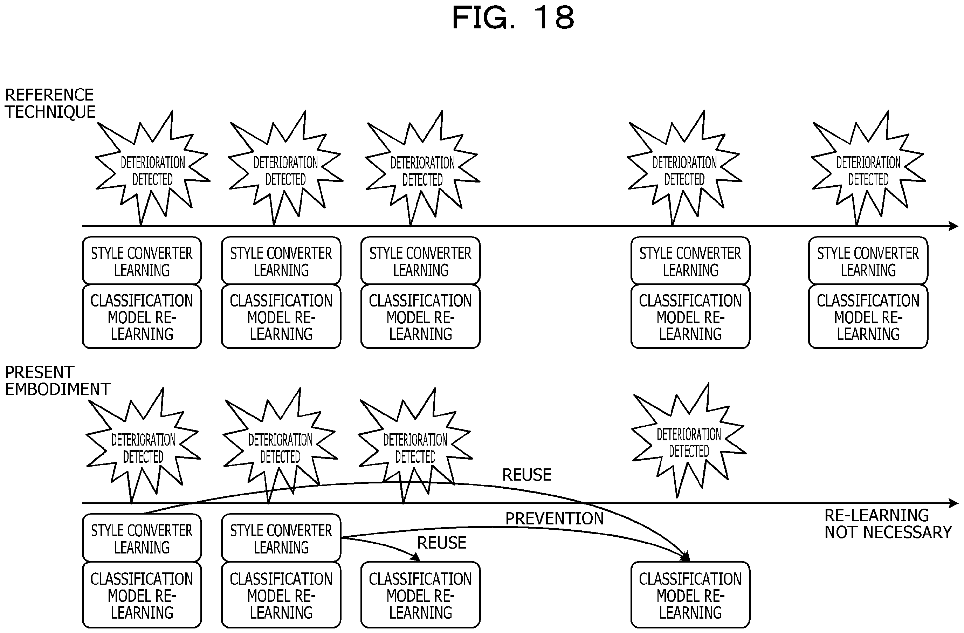

FIG. 18 is a diagram for describing effects of the information processing apparatus according to the present embodiment. In the reference technique, learning of the style converter and re-learning of the classification model are executed every time the deterioration of the classification model is detected, but in the information processing apparatus, the style converter is reused. Thus, the number of times of learning of the style converter when deterioration is detected is reduced, so that the time until the system is restarted may be shortened.

Furthermore, the information processing apparatus executes style conversion of input data by further using the style converter that is frequently used, and adds the input data to the learning data set (i.e., the training data set). Thus, a classification model that does not deteriorate with respect to the domain shift that often occurs is trained, so that deterioration of the re-learned classification model (the re-trained classification model) is less likely to occur.

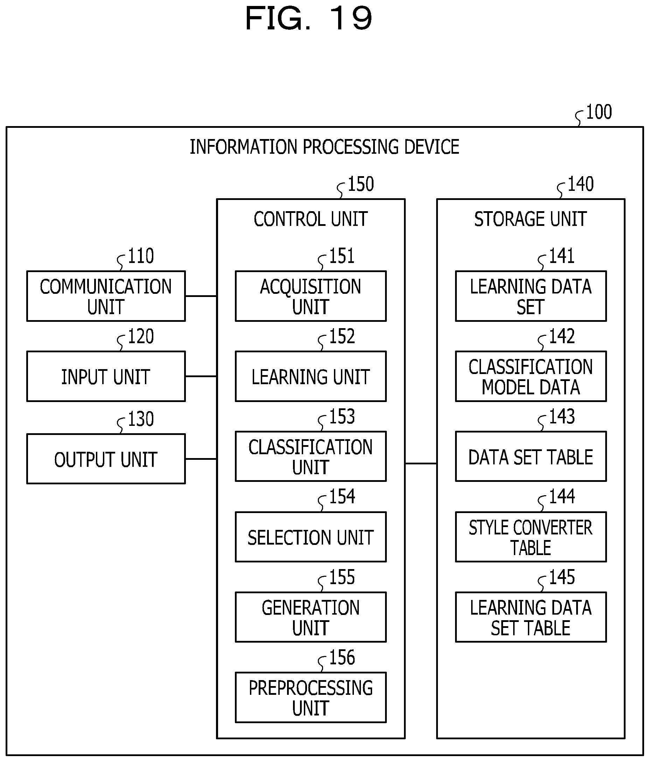

Next, one example of a configuration of the information processing apparatus according to the present embodiment will be described. FIG. 19 is a functional block diagram illustrating a configuration of the information processing apparatus according to the present embodiment. As illustrated in FIG. 19, this information processing apparatus includes a communication unit 110, an input unit 120, an output unit 130, a storage unit 140, and a control unit 150.

The communication unit 110 is implemented by, a network interface card (NIC) or the like, and controls communication between an external device and the control unit 150 via an electric communication line such as a local area network (LAN) or the Internet.

The input unit 120 is implemented by using an input device such as a keyboard or a mouse, and inputs various types of instruction information such as processing start to the control unit 150 in response to an input operation by the user.

The output unit 130 is implemented by a display device such as a liquid crystal display, a printing device such as a printer, or the like.

The storage unit 140 has the learning data set 141, classification model data 142, a data set table 143, a style conversion table 144, and a learning data set table 145 (may be referred to as "a training data set table"). The storage unit 140 corresponds to a semiconductor memory element such as a random access memory (RAM), a read-only memory (ROM), or a flash memory, or a storage device such as a hard disk drive (HDD).

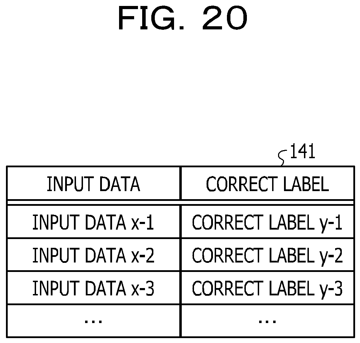

The learning data set 141 is a data set with a label used for machine learning of the classification model C20. FIG. 20 is a diagram illustrating one example of the data structure of the learning data set. As illustrated in FIG. 20, the learning data set 141 associates input data with the correct label. The input data corresponds to various types of information such as image data, voice data, and text data. In the present embodiment, the input data will be described as image data as one example, but the present embodiment is not limited to this. The correct label is a label set in advance for the input data. For example, a predetermined classification class is set as the correct label.

The classification model data 142 is the data of the classification model C20. For example, the classification model C20 has the structure of a neural network, and has an input layer, a hidden layer, and an output layer. The input layer, hidden layer, and output layer have a structure in which a plurality of nodes are connected by edges. The hidden layer and the output layer have a function called an activation function and a bias value, and weights are set on the edges. In the following description, the bias value and weights will be described as "parameters".

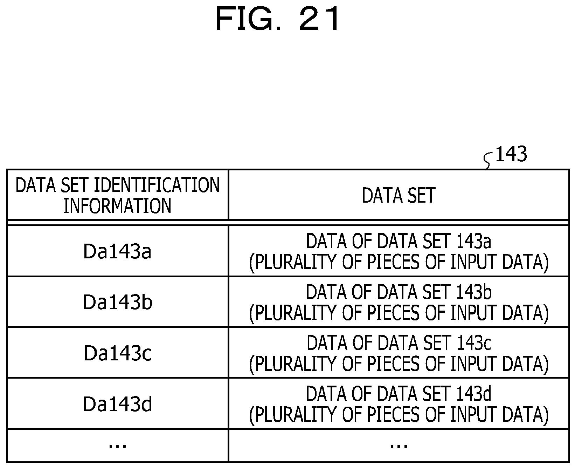

The data set table 143 is a table that retains a plurality of data sets. The data sets contained in data set table 143 are data sets collected at different time (period). FIG. 21 is a diagram illustrating one example of the data structure of the data set table. As illustrated in FIG. 21, the data set table 143 associates data set identification information with the data set.

The data set identification information is information that identifies a data set. The data set includes a plurality of pieces of input data.

In the following description, a data set of data set identification information "Da143a" will be described as a data set 143a. A data set of data set identification information "Da143b" will be described as a data set 143b. A data set of data set identification information "Da143c" will be described as a data set 143c. A data set of data set identification information "Da143d" will be described as a data set 143d. For example, it is assumed that the data sets 143a to 143d are data sets generated at different times and are registered in the data set table 143 in the order of the data sets 143a, 143b, 143c, and 143d.

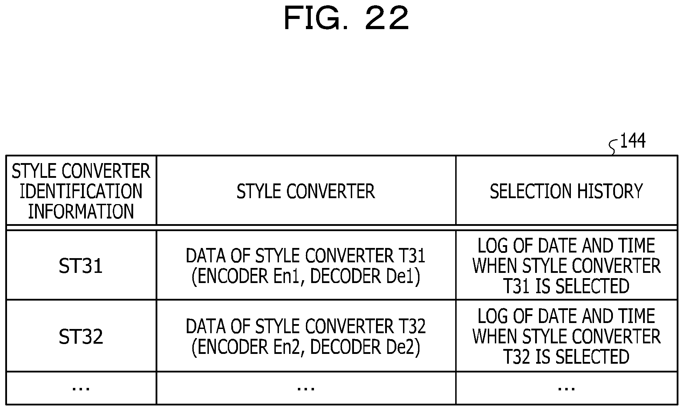

The style conversion table 144 is a table that holds data of a plurality of style converters. FIG. 22 is a diagram illustrating one example of the data structure of the style conversion table. As illustrated in FIG. 22, the style conversion table 144 associates style converter identification information, the style converter, and a selection history with each other.

The style converter identification information is information for identifying the style converter. The style converter is the data of the style converter, and has an encoder and a decoder. The encoder is a model that converts (projects) input data (image data) into a feature amount in the feature space. The decoder is a model that converts the feature amounts in the feature space into image data.

For example, the encoder and the decoder have the structure of a neural network, and have an input layer, a hidden layer, and an output layer. The input layer, hidden layer, and output layer have a structure in which a plurality of nodes are connected by edges. The hidden layer and the output layer have a function called an activation function and a bias value, and weights are set on the edges.

In the following description, the style converter of style converter identification information "ST31" will be described as the style converter T31. The style converter of style converter identification information "ST32" will be described as the style converter T32.

The selection history is a log of the date and time of selection of the style converter. By using the selection history, it is possible to specify the number of times the style converter has been selected from a predetermined time ago to the present. The number of times the style converter has been selected from a predetermined time ago to the present will be described as the "most recent number of times of selection".

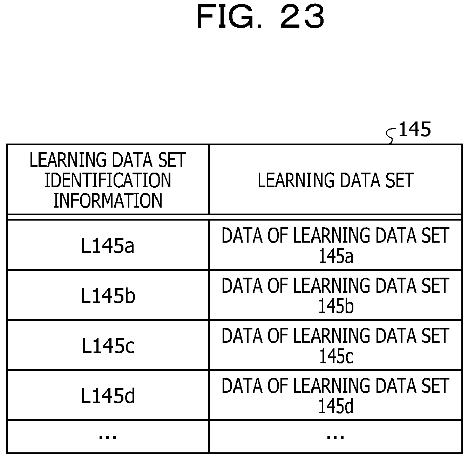

The learning data set table (i.e., the training data set table) 145 is a table that holds a plurality of learning data sets. FIG. 23 is a diagram illustrating one example of the data structure of the learning data set table. As illustrated in FIG. 23, the learning data set table 145 associates the learning data set identification information with the learning data set.

The learning data set identification information is information that identifies the learning data set. Each learning data set has a plurality of sets of input data and correct labels. As described in FIG. 10 and the like, the correct label of each learning data set included in the learning data set table 145 corresponds to the estimated label estimated using the classification model C20.

The description returns to FIG. 19. The control unit 150 includes an acquisition unit 151, a learning unit 152, a classification unit 153, a selection unit 154, a generation unit 155, and a preprocessing unit 156. The control unit 150 can be implemented by a central processing unit (CPU), a micro processing unit (MPU), or the like. Furthermore, the control unit 150 can be implemented by hard-wired logic such as an application specific integrated circuit (ASIC) or a field programmable gate array (FPGA).

The acquisition unit 151 is a processing unit that acquires various types of data from an external device or the like. Upon receiving the learning data set 141 from an external device or the like, the acquisition unit 151 stores the received learning data set 141 in the storage unit 140. Every time the acquisition unit 151 acquires a data set from the external device or the like, the acquisition unit 151 registers the acquired data set in the data set table 143. For example, the acquisition unit 151 periodically acquires a data set.

The learning unit 152 is a processing unit that executes machine learning of the classification model on the basis of the learning data set 141. As described in FIG. 6 and the like, the learning unit 152 learns (trains) the parameters of the classification model C20 so that the error (classification loss) between the output result y' output from the classification model C20 and the correct label y becomes small by inputting the input data x to the classification model C20. For example, the learning unit 152 uses the error backpropagation method to learn the parameters of the classification model C20 so that the error becomes small. The learning unit 152 registers learned data (may be referred to as "trained data") of the classification model C20 as the classification model data 142 in the storage unit 140.

Upon receiving a re-learning request from the preprocessing unit 156, the learning unit 152 executes re-learning of the classification model C20 by using the learning data set included in the learning data set table 145. The learning unit 152 updates the classification model data 142 with the data of the re-learned classification model C20 (may be referred to as "re-trained classification model").

The classification unit 153 is a processing unit that classifies the data set registered in the data set table 143 using the classification model C20. As described in FIG. 7 and the like, the classification unit 153 repeats the processing of acquiring the output result y' (classification result) by inputting the input data x included in the data set (for example, the data set 143a) to the classification model C20, thereby classifying the data set. The classification unit 153 may output a classification result of the data set to the output unit 130.

The classification unit 153 calculates the average certainty of the output result y' when classifying the data set. The classification unit 153 detects deterioration of the classification model C20 when the average certainty is equal to or less than a threshold Th1. For example, the threshold Th1 is assumed as 0.6. Upon detecting deterioration of the classification model C20, the classification unit 153 outputs information indicating that the deterioration has been detected to the selection unit 154.

The selection unit 154 is a processing unit that, upon acquiring the information indicating that the deterioration of the classification model C20 has been detected from the classification unit 153, selects a style converter from a plurality of style converters included in the style conversion table 144.

Processing of the selection unit 154 will be described using FIG. 16. It is assumed that the style conversion table 144 includes the style converter T31 and the style converter T32. It is also assumed that deterioration is detected when the data set 143d is applied to the classification model C20.

The selection unit 154 determines, by the following processing, whether or not the change from the data set 143c to the data set 143d is a change similar to the style change by the style converter T31 or style converter T32. The selection unit 154 style-converts the input data x2 of the data set 143c into the conversion data x3' and x3" by inputting the input data x2 to the style converters T31 and T32.

The selection unit 154 outputs the output label y3' by inputting the conversion data x3' to the classification model C20. The distribution of the output label y3' is assumed as the distribution dis2-1. The selection unit 154 outputs the output label y3" by inputting the conversion data x3" to the classification model C20. The distribution of the output label y3" is assumed as the distribution dis2-2. The selection unit 154 outputs the output label y4' by inputting the input data x4 of the data set 143d to the classification model C20. The distribution of the output label y4' is assumed as the distribution dis2-3.

The selection unit 154 calculates a similarity between the distribution dis2-3 and the distribution dis2-1 and the similarity between the distribution dis2-3 and the distribution dis2-2. The selection unit 154 increases the similarity as the difference between the respective distributions becomes smaller. The similarity between the distribution dis2-3 and the distribution dis2-2 is less than a threshold Th2, and thus the selection unit 154 excludes the style converter T32 corresponding to the distribution dis2-2 from selection targets.

On the other hand, the similarity between the distribution dis2-3 and the distribution dis2-1 is equal to or more than the threshold Th2, and thus the selection unit 154 selects the style converter T31 corresponding to the distribution dis2-1. The selection unit 154 outputs the selected style converter T31 to the preprocessing unit 156. The selection unit 154 registers the selection history corresponding to the selected style converter T31 in the style conversion table 144. The selection unit 154 acquires information of the current date from a timer that is not illustrated, and sets the information in the selection history.

In a case where a style converter whose similarity is equal to or higher than the threshold does not exist in the style conversion table 144, the selection unit 154 outputs a request for creating a style converter to the generation unit 155.

Incidentally, the selection unit 154 may additionally select a style converter whose most recent number of times of selection is equal to or more than a predetermined number of times on the basis of the selection history of the style conversion table 144. The selection unit 154 outputs the information of the additionally selected style converter to the preprocessing unit 156.

The generation unit 155 is a processing unit that creates a style converter upon acquiring the request for creating the style converter from the selection unit 154. The generation unit 155 registers information of the created style converter in the style conversion table 144. Furthermore, the generation unit 155 outputs the information of the style converter to the preprocessing unit 156.

Processing of the generation unit 155 will be described using FIG. 9. The generation unit 155 sets the style converter T31, the encoder En1', the decoder De1', and the identifier Di1. For example, the generation unit 155 sets the parameters of each of the encoder En1 and decoder De1 of the style converter T31, encoder En1', decoder De1', and identifier Di1 to initial values, and executes the following processing.

The generation unit 155 causes the style converter T31 to output the x2' by inputting the input data x1 of the data set 143a to the style converter T31. The x2' is input to the encoder En1', converted into a feature amount, and then converted into x2" by the decoder De1'.

The identifier Di1 receives an input of the x2' output from the style converter T31 or an input of the input data x2 of the data set 143b, and outputs Real or Fake depending on whether or not the input data is input data of the data set 143b.

When the error between the input data "x1" in FIG. 9 and the output data "x2"" becomes small and the output data x2' is input to the identifier Di1, the generation unit 155 machine learns the parameters of the encoders En1 and En1', decoders De1 and De1', and identifier Di1 so that the identifier Di1 outputs "Real". When the generation unit 155 executes such machine learning, the style converter T31 that style-converts the input data x1 of the data set 143a into the input data x2 of the data set 143b performs machine learning (generation). For example, the generation unit 155 uses the error backpropagation method to machine-learn each parameter so that the error becomes small.

The preprocessing unit 156 is a processing unit that style-converts pre-deterioration data into post-deterioration data by using the style converter selected by the selection unit 154. The preprocessing unit 156 inputs the pre-deterioration data to the classification model C20, and estimates the correct label of the post-deterioration data. The selection unit 154 generates the learning data set by repeating the processing described above, and registers the learning data set in the learning data set table 145.

Upon acquiring the information of the new style converter from the generation unit 155, the preprocessing unit 156 generates the learning data set by using such a style converter. For example, the preprocessing unit 156 inputs the pre-deterioration data to the new style converter, and style-converts the pre-deterioration data into post-deterioration data. The preprocessing unit 156 inputs the pre-deterioration data to the classification model C20, and estimates the correct label of the post-deterioration data.

Processing of the preprocessing unit 156 will be described using FIG. 10. As one example, it is assumed that the style converter T31 is selected by the selection unit 154. The preprocessing unit 156 style-converts the input data x1 into the input data x2' by inputting the input data x1 of the data set 143a to the style converter T31. The preprocessing unit 156 specifies the estimated label (correct label) y' on the basis of a classification result when the input data x1 is input to the classification model C20.

The preprocessing unit 156 registers a set of the input data x2' and the correct label y' in the learning data set 145a. The preprocessing unit 156 generates the learning data set 145a by repeatedly executing the processing described above for each piece of the input data x included in the data set 143a.

Incidentally, when the style converter is additionally selected by the selection unit 154, the preprocessing unit 156 generates a plurality of learning data sets by using the plurality of style converters.

The processing of the preprocessing unit 156 will be described using FIG. 14. In FIG. 14, the style converter selected by the selection unit 154 on the basis of the similarity is assumed as the style converter T32. The style converter additionally selected by the selection unit 154 on the basis of the most recent number of times of selection is assumed as the style converter T31.

First, the preprocessing unit 156 style-converts the input data x2 into the input data x3' by inputting the input data x2 of the data set 143b to the style converter T32. The preprocessing unit 156 specifies the estimated label (correct label) y' on the basis of the classification result when the input data x2 is input to the classification model C20.

The preprocessing unit 156 registers the set of the input data x3' and the correct label y' in the learning data set 145b. The preprocessing unit 156 generates the learning data set 145b by repeatedly executing the processing described above for each piece of the input data x included in the data set 143b.

The preprocessing unit 156 obtains the output data x3" by inputting the data x3' output from the style converter T32 to the style converter T31 as input data. The data x3' is data calculated by inputting the input data x2 of the data set 143b to the style converter T32.

The preprocessing unit 156 specifies the estimated label (correct label) y' on the basis of the classification result when the input data x2 is input to the classification model C20.

The preprocessing unit 156 registers the set of the input data x3" and the correct label y' in the learning data set 145c. The preprocessing unit 156 generates the learning data set 145c by repeatedly executing the processing described above for each piece of the input data x included in the data set 143b.

The preprocessing unit 156 generates the learning data set by executing the processing described above and registers the learning data set in the learning data set table 145. Furthermore, the preprocessing unit 156 outputs a re-learning request to the learning unit 152. The learning data set identification information used in the re-learning is set in the re-learning request. For example, when the preprocessing unit 156 generates the learning data sets 145b and 145c by executing the processing of FIG. 14, the preprocessing unit 156 sets the learning data set identification information that identifies the learning data sets 145b and 145c to the re-learning request. Thus, the learning unit 152 re-learns the classification model C20 by using the learning data sets 145b and 145c.

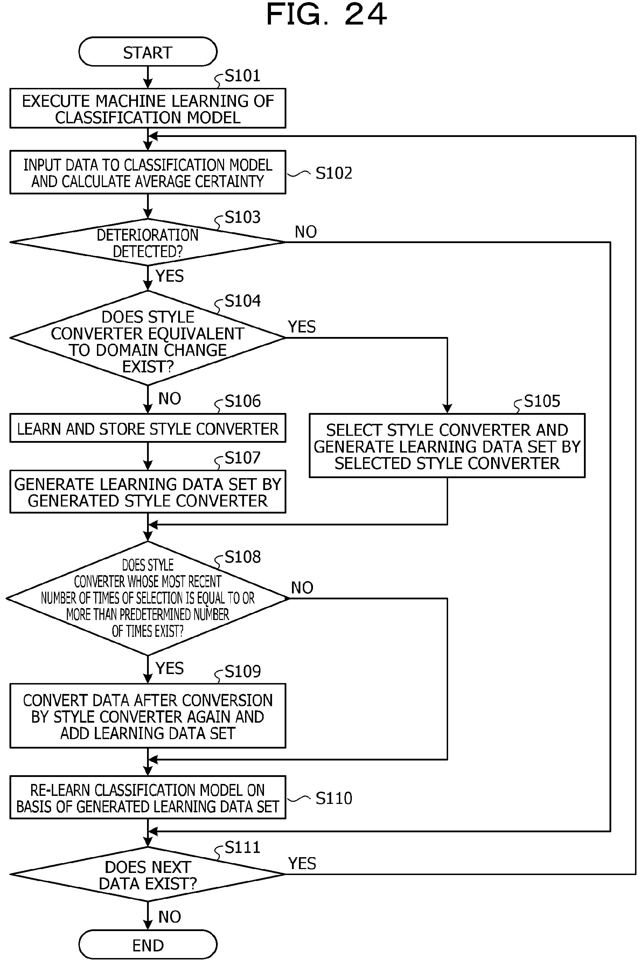

Next, one example of a processing procedure of an information processing apparatus 100 according to the present embodiment will be described. FIG. 24 is a flowchart illustrating a processing procedure of the information processing apparatus according to the present embodiment. As illustrated in FIG. 24, the learning unit 152 of the information processing apparatus 100 executes machine learning of the classification model on the basis of the learning data set 141 (step S101).

The classification unit 153 of the information processing apparatus 100 inputs data to the classification model and calculates the average certainty (step S102). When deterioration is not detect (step S103, No), the classification unit 153 proceeds to step S111.

On the other hand, when deterioration is detected (step S103, Yes), the classification unit 153 proceeds to step S104. When a style converter equivalent to the domain change exists (step S104, Yes), the selection unit 154 of the information processing apparatus 100 proceeds to step S105. The selection unit 154 selects the style converter equivalent to the domain change. The preprocessing unit 156 of the information processing apparatus 100 generates the learning data set by the selected style converter (step S105), and proceeds to step S108.

On the other hand, when there is no style converter equivalent to the domain change (step S104, No), the selection unit 154 proceeds to step S106. The generation unit 155 of the information processing apparatus 100 learns the style converter and stores the style converter in the style conversion table 144 (step S106). The preprocessing unit 156 generates the learning data set by the generated style converter (step S107).

When there is no style converter whose most recent number of times of selection is equal to or more than a predetermined number of times (steps S108, No), the selection unit 154 proceeds to step S110. On the other hand, when there is a style converter whose most recent number of times of selection is equal to or more than the predetermined number of times (step S108, Yes), the selection unit 154 proceeds to step S109.

The preprocessing unit 156 converts the data after conversion by the style converter again, and adds the learning data (step S109). The learning unit 152 re-learns the classification model on the basis of the generated learning data set (step S110).

When the next data exists (step S111, Yes), the information processing apparatus 100 proceeds to step S102. On the other hand, when the next data does not exist (steps S111, No), the information processing apparatus 100 ends the processing.

Next, effects of the information processing apparatus 100 according to the present embodiment will be described. When deterioration of a classification model has occurred, the information processing apparatus 100 selects a style converter capable of reproducing a domain change from before deterioration to after deterioration from a plurality of style converters, and converts data before deterioration into data after deterioration and perform preprocessing by using the selected style converter again. Thus, it is possible to suppress generation of the style converter each time the deterioration of the classification model occurs, and reduce the number of times of learning of the style converter. By reducing the number of times of learning, the time until the system using the classification model is restarted may be shortened. Furthermore, the cost required for re-learning to cope with the domain shift may be reduced.

The information processing apparatus 100 specifies a correct label by inputting the data before deterioration to the classification model, and generates conversion data by inputting the data before deterioration to the style converter. The information processing apparatus 100 generates learning data (may be referred to as "training data") by associating the correct label with the conversion data. By using such learning data (i.e., training data), it is possible to execute re-learning (i.e., re-training) of the classification model.

As described in FIGs. 4 and 5, when a plurality of style converters are selected, the information processing apparatus 100 generates a plurality of pieces of conversion data by using the plurality of style converters, and uses the plurality of pieces of conversion data as learning data of the classification model. Thus, the machine learning of the classification model may be executed with increased variations of the learning data, so that the deterioration of accuracy of the classification model may be suppressed. For example, the re-learning may make it difficult to stop the system that uses the classification model.

The information processing apparatus 100 generates a new style converter when deterioration of the classification model occurs in a case where there is no style converter capable of reproducing the domain change from before the deterioration to after the deterioration. Thus, even in a case where there is no style converter that may reproduce the domain change from before the deterioration to after the deterioration, it is possible to cope with the re-learning of the classification model.

The information processing apparatus 100 executes re-learning of the classification model by using the learning data set registered in the learning data set. Thus, even if the domain shift occurs, the classification model that is capable of coping with such a domain shift may be re-learned and used.

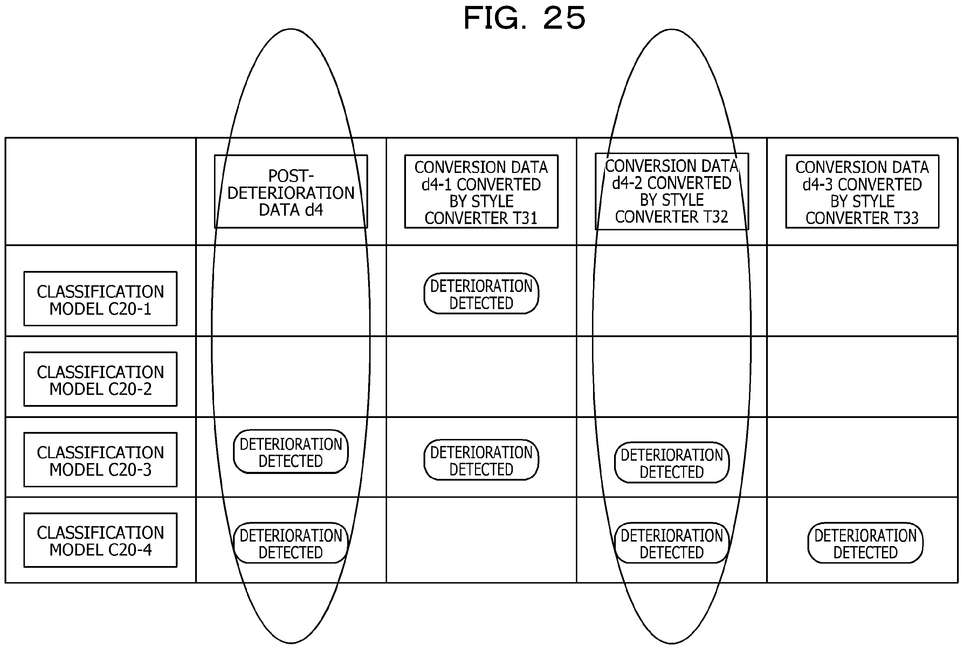

Incidentally, although the selection unit 154 of the information processing apparatus 100 according to the present embodiment selects the style converter to be reused on the basis of point 2 described with FIG. 3, but the present embodiment is not limited to this. For example, the selection unit 154 may perform the processing illustrated in FIG. 25 to select the style converter to be reused.

FIG. 25 is a diagram for describing another processing of the selection unit. In FIG. 25, it is assumed that a plurality of classification models C20-1, C20-2, C20-3, and C20-4 exist as one example. For example, the system uses a plurality of classification models. Furthermore, it is assumed that style converters T31, T32, and T33 exist. It is assumed that the selection unit 154 has detected the deterioration of the classification models C20-3 and C20-4 with post-deterioration data d4.

The selection unit 154 inputs the post-deterioration data d4 to the style converter T31, and style-converts the post-deterioration data d4 into conversion data d4-1. The selection unit 154 inputs the post-deterioration data d4 to the style converter T32, and style-converts the post-deterioration data d4 into conversion data d4-2. The selection unit 154 inputs the post-deterioration data d4 to the style converter T33, and style-converts the post-deterioration data d4 into conversion data d4-3.

The selection unit 154 inputs the conversion data d4-1 to the classification models C20-1 to C20-4, and determines whether or not deterioration is detected. For example, it is assumed that deterioration is detected by the classification models C20-1 and C20-3 with the conversion data d4-1.

The selection unit 154 inputs the conversion data d4-2 to the classification models C20-1 to C20-4, and determines whether or not deterioration is detected. For example, it is assumed that deterioration is detected by the classification models C20-3 and C20-4 with the conversion data d4-2.

The selection unit 154 inputs the conversion data d4-2 to the classification models C20-1 to C20-4, and determines whether or not deterioration is detected. For example, it is assumed that deterioration is detected by the classification model C20-4 with the conversion data d4-3.

Here, a result of detection of deterioration when the post-deterioration data d4 is input to the classification models C20-1 to C20-4 and a result of detection of deterioration when the conversion data d4-3 is input to the classification models C20-1 to C20-4 are consistent. Thus, the selection unit 154 selects the style converter T32 as the style converter to be reused. This makes it possible to select a style converter that is possible to be reused.

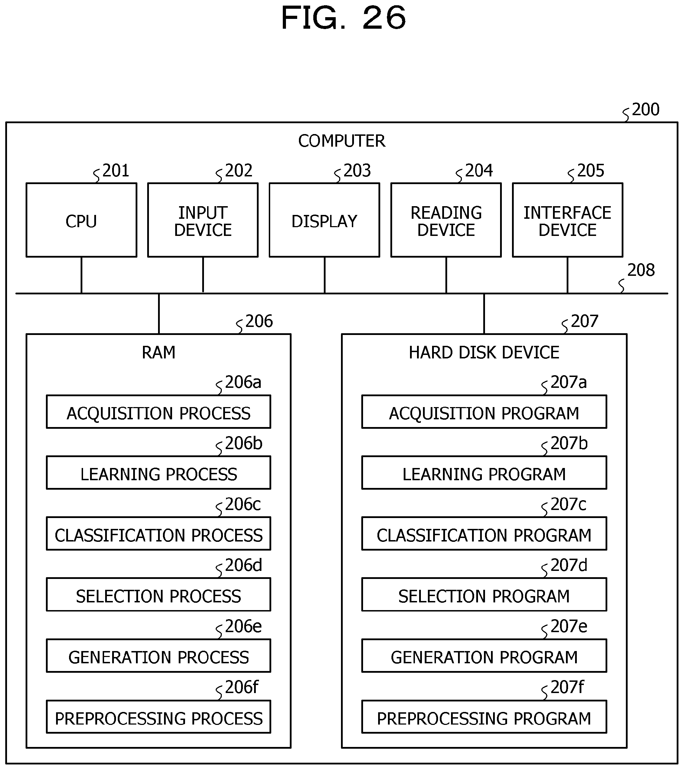

Next, one example of a hardware configuration of a computer that implements functions similar to those of the information processing apparatus 100 described in the present embodiment will be described. FIG. 26 is a diagram illustrating one example of a hardware configuration of a computer that implements functions similar to those of the information processing apparatus according to the present embodiment.

As illustrated in FIG. 26, a computer 200 includes a CPU 201 that executes various types of calculation processing, an input device 202 that receives input of data from a user, and a display 203. Furthermore, the computer 200 includes a reading device 204 that reads a program and the like from a storage medium, and an interface device 205 that exchanges data with an external device or the like via a wired or wireless network. The computer 200 includes a RAM 206 that temporarily stores various types of information, and a hard disk device 207. Then, each of the devices 201 to 207 is connected to a bus 208.

The hard disk device 207 includes an acquisition program 207a, a learning program 207b, a classification program 207c, a selection program 207d, a generation program 207e, and a preprocessing program 207f. The CPU 201 reads the acquisition program 207a, the learning program 207b, the classification program 207c, the selection program 207d, the generation program 207e, and the preprocessing program 207f and develops the programs in the RAM 206.

The acquisition program 207a functions as an acquisition process 206a. The learning program 207b functions as a learning process 206b. The classification program 207c functions as a classification process 206c. The selection program 207d functions as a selection process 206d. The generation program 207e functions as a generation process 206e. The preprocessing program 207f functions as a preprocessing process 206f.

Processing of the acquisition process 206a corresponds to the processing of the acquisition unit 151. Processing of the learning process 206b corresponds to the processing of the learning unit 152. Processing of the classification process 206c corresponds to the processing of the classification unit 153. Processing of the selection process 206d corresponds to the processing of the selection unit 154. Processing of the generation process 206e corresponds to the processing of the generation unit 155. Processing of the preprocessing process 206f corresponds to the processing of the preprocessing unit 156.

Note that each of the programs 207a to 207f may not necessarily be stored in the hard disk device 207 beforehand. For example, each of the programs is stored in a "portable physical medium" such as a flexible disk (FD), a compact disc read only memory (CD-ROM), a digital versatile disc (DVD) disk, a magneto-optical disk, or an integrated circuit (IC) card to be inserted in the computer 200. Then, the computer 200 may read and execute each of the programs 207a to 207d.

## Claims

1. A determination processing program comprising instructions which, when the program is executed by a computer, cause the computer to execute processing, the processing comprising:
calculating, in response that deterioration of a classification model has occurred, a similarity between a first determination result and each of a plurality of second determination results, the first determination result being a determination result output from the classification model by inputting first input data after the deterioration has occurred to the classification model, and the plurality of second determination results being determination results output from the classification model by inputting, to the classification model, a plurality of pieces of post-conversion data converted by inputting second input data before the deterioration occurs to a plurality of data converters;
selecting a data converter from the plurality of data converters on the basis of the similarity; and
preprocessing in data input of the classification model by using the selected data converter.

2. The determination processing program according to claim 1, wherein the preprocessing includes
specifying a correct label that corresponds to the second input data by inputting the second input data to the classification model; and
generating training data in which the correct label and the post-conversion data are associated with each other.

3. The determination processing program according to claim 2, wherein the selecting includes:
counting, every time the data converter is selected, a number of times of selecting the data converter;
selecting a first data converter from the plurality of data converters on the basis of the counted number of times; and
selecting a second data converter from the plurality of data converters on the basis of the similarity, and
the preprocessing generates the training data on the basis of first post-conversion data, second post-conversion data, and the correct label, the first post-conversion data being data converted by inputting the second input data to the first data converter, the second post-conversion data being data converted by inputting the first post-conversion data to the second data converter.

4. The determination processing program according to claim 1, wherein the processing further comprises
generating, in response that there is no second determination result similar to the first determination result, a new data converter on the basis of the first input data and the second input data.

5. The determination processing program according to claim 2 or 3, wherein the processing further comprises
executing machine learning with respect to the classification model on the basis of the learning data.

6. The determination processing program according to claim 1, wherein the processing further comprises
selecting a data converter from the plurality of data converters on the basis of a first result and a second result, the first result being a result of detection of deterioration when data is input to a plurality of classification models, the second result being a result of detection of deterioration when a plurality of pieces of post-conversion data obtained by inputting the data to the plurality of data converters are input to the plurality of classification models.

7. A computer-implemented method of a determination processing, the method comprising:
calculating, in response that deterioration of a classification model has occurred, a similarity between a first determination result and each of a plurality of second determination results, the first determination result being a determination result output from the classification model by inputting first input data after the deterioration has occurred to the classification model, and the plurality of second determination results being determination results output from the classification model by inputting, to the classification model, a plurality of pieces of post-conversion data converted by inputting second input data before the deterioration occurs to a plurality of data converters;
selecting a data converter from the plurality of data converters on the basis of the similarity; and
preprocessing in data input of the classification model by using the selected data converter.

8. An information processing apparatus comprising:
a selection unit that
calculates, in response that deterioration of a classification model has occurred, a similarity between a first determination result and each of a plurality of second determination results, the first determination result being a determination result output from the classification model by inputting first input data after the deterioration has occurred to the classification model, and the plurality of second determination results being determination results output from the classification model by inputting, to the classification model, a plurality of pieces of post-conversion data converted by inputting second input data before the deterioration occurs to a plurality of data converters, and
selects a data converter from the plurality of data converters on the basis of the similarity; and
a preprocessing unit that performs preprocessing in data input of the classification model by using the selected data converter.
